# EUROPEAN PATENT SPECIFICATION

(11) **EP 2 278 054 B1**
(45) Date of publication and mention of the grant of the patent: **23.11.2011**
(21) Application number: 10187228.1
(22) Date of filing: 04.12.2006
(51) Int. Cl.: D04H 13/00, A47L 13/16, A47L 13/17, B32B 5/26, D04H 1/46

(54) **Bulky sheet**
Bauschiges Blatt
Feuille volumineuse

(30) Priority: 05.12.2005 JP 2005351123
(43) Date of publication of application: 26.01.2011
(62) Divisional of application: 06025038.8
(73) Proprietor: Kao Corporation, Chuo-ku Tokyo (JP)
(72) Inventor: Kawai, Takashi, Haga-gun, Tochigi (JP); Ishikawa, Kenji, Haga-gun, Tochigi (JP); Yuji, Akemi, Haga-gun, Tochigi (JP); Saito, Yutaka, Haga-gun, Tochigi (JP)
(74) Representative: Vossius & Partner

(56) References cited:
- EP-A- 1 591 575
- EP-A1- 0 863 240
- WO-A-2004/020725
- WO-A1-03/095730
- JP-A- 2002 369 782
- US-A- 5 525 397
- US-A1- 2003 019 088
- US-A1- 2004 258 844
- US-B2- 6 936 333

## Description

The present invention relates to a bulky sheet made mainly of a fiber material.

US-A-5,525,397 discloses a sheet having a network sheet and a nonwoven fabric-like fiber aggregate on one or both sides of the network sheet. The fiber aggregate is formed by the entanglement of fibers of a fiber web. The fibers constituting the fiber aggregate are in entanglement not only among themselves but with the network sheet to form a unitary sheet. The surface of the sheet is substantially flat. Where the degree of fiber entanglement is reduced enough to increase freedom of the constituent fibers to give the sheet improved dust and debris (e.g., hair) trapping performance, the sheet is liable to fuzz or shed fibers due to the loose entanglement of the fibers.

US-A-6,936,33 discloses a bulky sheet having a network sheet and a fiber aggregate formed by hydroentanglement of a fiber web and having a large number of protrusions and depressions formed of the fiber aggregate. The fibers of the fiber aggregate are in entanglement not only among themselves but with the network sheet to be unitary with the network sheet. The sheet is different from that of US-A-5,525,397 in that it has protrusions and depressions all over its area. The protrusions and depressions are results of hydro entanglement that is performed on the fiber aggregate in such a manner that the fibers are rearranged to make the fiber aggregate bend zigzag in its thickness direction. The protrusions and depressions per se exhibit shape retention. Compared with the sheet of US-A-5,525,397, this sheet is less liable to fuzz or shed fibers. When the sheet is used as a wet sheet as impregnated with a liquid, however, it tends to meet a high frictional resistance against a surface to be wiped and release the liquid at once.

The present invention provides a bulky sheet having a fiber aggregate formed by hydroentanglement of a fiber web. The fiber aggregate has a first region having a high fiber density and a small thickness and a second region having a lower fiber density and a larger thickness than the first region. The second region is surrounded by a closed figure defined by the first region. The second region has protrusions and depressions.

The process of producing the bulky sheet includes the steps of entangling fibers of a fiber web with each other to form a fiber aggregate, putting the fiber aggregate on a relief patterning unit having a first pattern template having a number of projections and depressions and a second pattern template having a number of openings superposed on the first pattern template, and applying a high pressure water jet against the fiber aggregate backed by the relief patterning unit to cause part of the fiber aggregate to protrude toward the depression exposed in the opening to form a second region having a relief pattern corresponding to the depression exposed in the opening while forming a first region in the part of the fiber aggregate located on the second pattern template.
Fig. 1 is a perspective of a bulky sheet incorporating an embodiment of the present invention.
Fig. 2 is a cross-section of the bulky sheet of Fig. 1 taken along line II-II.
Fig. 3 is a perspective of a bulky sheet incorporating another embodiment of the present invention (corresponding to Fig. 1).
Fig. 4 is a schematic view of an apparatus suitable to produce the bulky sheet of Fig. 1.
Fig. 5 is a schematic view of a relief patterning unit in Fig. 4.
Fig. 6(a), Fig. 6(b), and Fig. 6(c) illustrate a first pattern template of the relief patterning unit in Fig. 4.
Fig. 7 illustrates a second pattern template of the relief patterning unit in Fig. 4.
Fig. 8 illustrates another second pattern template of the relief patterning unit in Fig. 4.
Fig. 9 illustrates a fiber aggregate being patterned in relief on the relief patterning unit of Fig. 5.

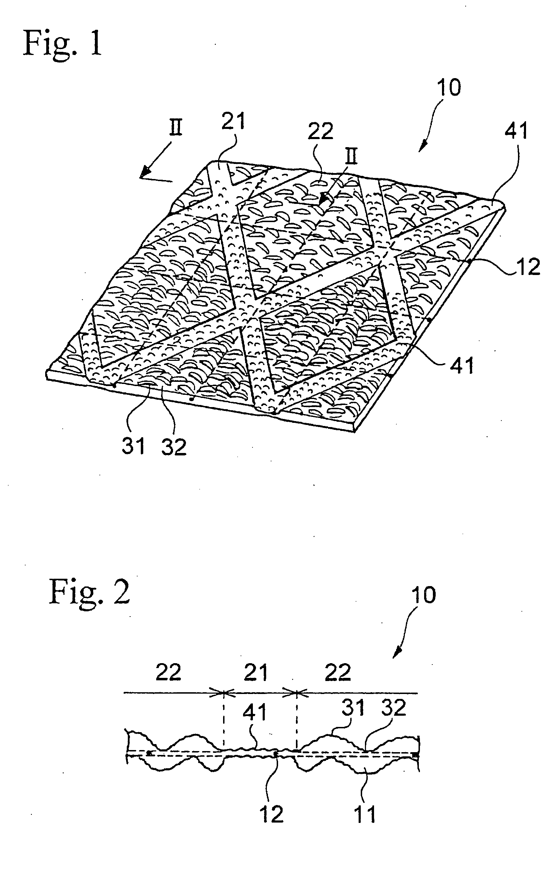

The present invention will be described with reference to the accompanying drawings. Fig. 1 is a perspective of a bulky sheet 10 incorporating an embodiment of the present invention. Fig. 2 is a cross-section of the bulky sheet 10, taken along line II-II in Fig. 1. The bulky sheet 10 is a fiber sheet made mainly of a fibrous material. The bulky sheet 10 is composed of a fiber aggregate 11 formed by hydroentanglement of a fiber web and a net sheet 12 disposed inside the fiber aggregate. The fibers of the fiber aggregate 11 are entangled in the meshes of the net sheet 12 by hydroentanglement to unite the fiber aggregate 11 and the net sheet 12.

The fiber aggregate 11 is preferably formed only through entanglement of its constituent fibers so that the bulky sheet 10 feels good and, when used as a cleaning sheet especially for floors, exhibits high hair- and fine dust-trapping and holding capabilities unlike a fiber aggregate bonded through the fusion of thermoplastic resin fibers.

The bulky sheet 10 has a first region 21 and second regions 22. The second regions 22 are each surrounded by the first region 21. As illustrated in Fig. 1, the first region 21 is arranged to depict a rhombic lattice which is continuous in the planar direction of the bulky sheet 10. Each of the second regions 22 is surrounded by a rhombic unit of the lattice. Because the first region 21 defines closed figures (rhombuses), the second regions 22 are each delineated by the closed figure of the first region 21 and therefore separated from each other. Accordingly, the outline of each second regions 22 corresponds to the rhombic unit of the lattice of the first region 21.

The first region 21 and the second regions 22 are distinguished by fiber density and thickness. The first region 21 has a higher fiber density and a smaller thickness than the second regions 22. The second regions 22 have a lower fiber density and a larger thickness than the first region 21. Thus, the bulky sheet 10 has the thicker second regions 22 and the thinner first region 21 on one side thereof, which makes the bulky sheet 10 bulky.

The thicker second regions 22 have protrusions 31 and depressions 32. The protrusions 31 result from the fiber aggregate's protruding from one side to the other side thereof within the second regions 22. Between the protrusions 31 are positioned the depressions 32. Understandably, the second regions 22 have an uneven surface as a whole.

The protrusions 31 are substantially equal in size and provided in a regular pattern, each having the shape of a mountain which is long and narrow in its plan view. The protrusions 31, defined by the depressions 32, are spaced apart from each other, but some of them adjacent in the width and/or length direction of the sheet 10 may be connected.

As described, the bulky sheet 10 has the thick, raised second regions 22 and the thin, depressed first region 21, and the second regions 22 further have the protrusions 31 and the depressions 32, namely, a double textured structure. With such a double-textured structure, when the bulky sheet 10 is used as a dry cleaning sheet especially for cleaning floors, it is superior in capabilities of cleaning grooves of floors or uneven surfaces and of capturing and holding not only relatively large dust particles such as bread crumbs but hairs and dirt particles such as fine dust. When the bulky sheet 10 is used as a wet cleaning sheet containing a liquid, it is convenient to use because it has reduced frictional resistance in wiping and slowly releases the liquid.

Since the less dense second regions 22 are defined by the closed figure of the denser first region 21, the fibers in the second regions 22 are effectively prevented from fuzzing and shedding while having sufficient freedom of movement.

The first region 21, which is denser than the second regions 22, preferably has a fiber density of 0.020 to 0.65 g/cm³, more preferably 0.035 to 0.50 g/cm³, to securely prevent fuzzing and shredding of the fibers in the second regions 22 having high fiber freedom. On the other hand, the fiber density of the second regions 22 are preferably 0.005 to 0.65 g/cm³, more preferably 0.01 to 0.40 g/cm³, provided that it is smaller than that of the first region 21, to secure dust trapping capabilities of the bulky sheet 10 for use as a cleaning sheet.

In connection with the fuzzing and shedding tendencies and the freedom of the fibers, it is preferred for the fibers constituting the fiber aggregate 11 to have a length of 20 to 100 mm, more preferably 30 to 70 mm, so as to prevent fuzzing and shedding while securing freedom of movement. When the fiber aggregate 11 contains two or more kinds of fibers, it is preferred that an average fiber length be in that range.

The fiber density of the first region 21 and the second regions 22 can be measured as follows. A piece of predetermined area cut out of each of the first region 21 and the second regions 22 are weighed. The thickness of the cut piece is measured with a laser thickness sensor over a length of 50 mm. An average of ten maximum points of the thickness profile is obtained as a thickness of the piece. The weight of the piece is divided by the area to give a basis weight. The fiber density of the piece is calculated from its thickness and basis weight. The fiber density of the first or second region is defined to be an average of the thus calculated fiber density values.

The second regions 22 are thicker than the first region 21. When the bulky sheet 10 is used as a cleaning sheet, it is mostly the second regions 22 that come into contact with a surface to be cleaned. The first region 21 hardly comes into contact with the surface. In other words, the contact area of the bulky sheet 10 with the surface to be cleaned is smaller than the total area of the sheet 10. As a result, the bulky sheet 10 has reduced frictional resistance in wiping when it is used as a wet cleaning sheet impregnated with a liquid. From this viewpoint, the thickness of the second regions 22 are preferably 1.0 to 5.0 mm, more preferably 1.2 to 4.0 mm, and that of the first region 21 is preferably 0.1 to 1.5 mm.

The first region 21 does not come into contact with a surface to be cleaned so easily as the second regions 22, which does not mean that the first region 21 does not participate in cleaning. The first region 21 has an increased fiber density and yet exhibits dust trapping capabilities because it is formed only by the entanglement of the fibers. In contrast, a depressed region formed by fusion bonding the fibers by heat application, such as heat embossing, does not have dust trapping capabilities.

The thickness of the first region 21 and the second regions 22 can be measured as follows. A piece of predetermined area of each of the first region 21 and the second regions 22 are measured for thickness with a laser thickness sensor over a length of 50 mm. An average of ten maximum points of the thickness profile is obtained as a thickness of the region.

The first region 21 to second region 22 area ratio has an influence on the frictional resistance in wiping, particularly in applications as a liquid-impregnated wet cleaning sheet. Where the area proportion of the second regions 22 in the bulky sheet 10 is too large, the sheet 10 will have a high frictional resistance in wiping. If the proportion of the first region 21 is too large, the area of the second regions 22 with high fiber freedom is too small to exhibit sufficient dust trapping capabilities, and the amount of impregnation of a liquid and the liquid slow releasability will be reduced. From these considerations, the area ratio of the first region 21 is preferably 20% to 90%, more preferably 25% to 80%, and the total area ratio of the second regions 22 is preferably 10% to 80%, more preferably 20% to 75%.

The protrusions 31 and the depressions 32 of the second regions 22 are formed as a result of rearrangement and reentanglement of the fibers of a fiber aggregate 11 by hydroentanglement. Therefore, the protrusions 31 and the depressions 32 have shape retention by themselves and hardly collapse under pressure. On forming the protrusions 31 and the depressions 32, the fiber aggregate 11 has an increased apparent thickness over that before the formation.

What is meant by the expression "rearrangement and reentanglement of the fibers" as referred to here is that a fiber aggregate having had its fibers weakly entangled by first hydroentanglement is subjected to second hydroentanglement on a relief patterning unit. By the second hydroentanglement, the fibers are rearranged and reentangled in conformity to the uneven contour of the relief patterning unit.

The protrusions 31 and the depressions 32 are formed as a result of zigzag bending of the fiber aggregate 11 in the thickness direction in its cross-sectional view. A large number of the bends of the zigzag extending in the planar direction correspond to the protrusions 31 and the depressions 32. While the fibers are being rearranged by hydroentanglement, the high pressure water jets cause the fibers that are forming the protrusions 31 to move toward the parts where the depressions 32 are being formed, resulting in a fiber distribution. Such a fiber distribution should preferably be extremely minimized. If the fiber distribution proceeds, a hole will be bored in the areas where the protrusions 31 are to be formed. The fiber aggregate 11 can be bent zigzag while avoiding such a fiber distribution by, for example, controlling the energy given to the fiber aggregate 11 in the hydroentanglement.

The first region 21 has a great number of small protrusions 41. Each small protrusion 41 is dome-shaped and hollow. The small protrusions 41 are regularly arranged all over the first region 21. The thickness (height) of the small protrusions 41 is smaller than that of the second regions 22. The small protrusions 41 formed in the first region 21 improve the dust trapping capabilities.

In the plan view, the small protrusion 41 is circular with a preferred diameter of 0.5 to 5.0 mm, more preferably 1.0 to 4.0 mm. A preferred total area ratio of the small protrusions 41 to the area of the first region 21 is 10% to 90%, more preferably 15% to 70%.

The fiber aggregate 11 and the net sheet 12 that compose the bulky sheet 10 will be described. The fiber aggregate 11 is a nonwoven fabric-like sheet formed by intermingling the constituent fibers of a fiber web by hydroentanglement. Compared with a fiber aggregate formed through fusion bonding or adhesion of the constituent fibers, the fiber aggregate 11 which is formed through, preferably only through, entanglement of its constituent fibers affords higher freedom to the fibers. As a result, the bulky sheet 10 feels good and exhibits high hair- and fine dust-trapping and holding capabilities.

The fibers making up the fiber aggregate 11 include those recited in US-A-5,525,397, col. 4, 11. 3-10. The fiber aggregate 11 preferably contains at least 50% by weight of fibers having a fineness of 5 dtex or less, more preferably at least 70% by weight of fibers having a fineness of 3.5 dtex or less, which is effective to prevent boring at the protrusions 31 and to develop and retain sufficient bulkiness, and which is also effective in exhibiting high capabilities of trapping and holding hair when used as a cleaning sheet. The basis weight of the fiber aggregate 11 and the length of the fibers are decided as appropriate to the intended use of the bulky sheet taking into comprehensive consideration the fabricability, cost, and the like. For use as a cleaning sheet, for example, the fiber aggregate 11 preferably weighs 30 to 100 g/m², more preferably 40 to 80 g/m², to prevent boring and to develop and retain sufficient bulkiness. A surface active agent or a lubricant that can improve the physical surface properties and the dust trapping capabilities may be applied to the fiber aggregate.

In applications as a wet cleaning sheet impregnated with a liquid, the fiber aggregate 11 preferably contains hydrophilic fibers, such as cellulose fiber and polyacrylonitrile fiber. Examples of the cellulose fiber are rayon. Lyocell, Tencel, and cotton. They can be used either individually or as a combination of two or more thereof. Synthetic fibers having been hydrophilized are useful as well. Hydrophilization can be achieved by, for example, applying a hydrophilizing agent to the fiber surface or incorporating a hydrophilizing agent into fiber-forming material. Commonly used surface active agents for textile can be used as a hydrophilizing agent. The hydrophilizing agent is required to impart not only initial hydrophilicity but, preferably, sustained hydrophilicity. Initial and sustained hydrophilicity can be evaluated by what we call a fiber ball method as follows. A 1.0 g portion of a carded fiber web is wadded up into a 7 cm diameter ball. The fiber ball is softly put on the surface of water. The initial hydrophilicity is represented by the time (second) required until the ball sinks completely below the water surface. Separately, another fiber ball weighing 1 g is shaken together with 200 g of pure water for 30 minutes on a shaker, dried, and tested in the same manner as described above to determine the sustained hydrophilicity. The thus determined initial and sustained hydrophilicities of the fiber aggregate 11 are preferably 0.1 to 20 seconds and 0.2 to 30 seconds, respectively. The sheet 10 preferably has, as another measure of hydrophilicity of the fiber aggregate 11, a water absorbency of 2 mm or higher in 10 minutes in both the machine and transverse directions when tested by the Byreck method (JIS L1907 5.1.2).

The fiber aggregate 11 may contain other synthetic fibers in addition to the cellulose fiber to have improved cleaning performance, maneuverability, and texture or feel. Useful synthetic fibers include polyester fibers, polypropylene fibers, polyamide fibers, acetate fibers, polyvinyl alcohol fiber, and polyvinyl chloride fibers. The synthetic fibers can be used either individually or as a combination of two or more thereof. The synthetic fibers may have a circular cross-section or a modified cross-section, such as a C-shaped, Y-shaped or β-shape cross-section or a hollow cross-section.

The net sheet 12 disposed inside the fiber aggregate 11 is a resin-made, rectangular lattice net. The net sheet 12 preferably has an air permeability of 0.1 to 1000 cm³/(cm²·sec). In addition to a net, nonwovens, paper, perforated films, etc. may serve as the net sheet 12 as long as the recited air permeability is secured. It is preferred that the fibers of the fiber aggregate 11 be not only entangled with each other but also entangled and/or fused with the net sheet 12, whereby the bulky sheet 10 exhibits improved tensile strength. In using a lattice net as the net sheet 12, the monofilament diameter of the net is preferably 50 to 600 µm, more preferably 75 to 350 µm, and the aperture width is preferably 2 to 30 mm, more preferably 4 to 20 mm. Materials making the net sheet 12 include those recited in US 5,525,397, col. 3, 11. 39-46. Heat shrinkable materials are not excluded from usable materials for making the net sheet 12. Nevertheless, it is desirable for the net sheet 12 not to have heat shrinkability or to have heat shrinkability, if any, of not more than 3% on being heated at 140°C for 3 minutes.

The bulky sheet 10 preferably has a basis weight of 40 to 200 g/m², more preferably 50 to 100 g/m², to have moderate bulkiness, improved fabricability, and sufficient impregnability with liquid.

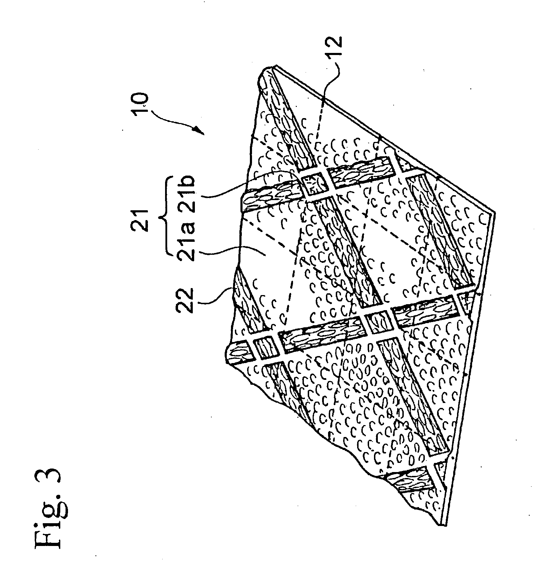

Fig. 3 is a perspective of a bulky sheet 10 incorporating another embodiment of the present invention. The difference from the embodiment of Figs. 1 and 2 consists in the configuration of the first region 21 and the second regions 22. Otherwise the description on the bulky sheet shown in Figs. 1 and 2 applies to the embodiment of Fig. 3. More specifically, the second regions 22 are arranged to make a rhombic lattice pattern as a whole. The intersecting bars of the rhombic lattice are discontinued at their intersections. That is, there is formed the first region 21 between every adjacent pieces of the rhombic lattice bars, i.e., the second regions 22. The first region 21 includes rhombic parts 21a each surrounded by a rhombic unit of the lattice of the second regions 22 and parts 21b positioned between every adjacent piece of the lattice bars. Every second region 22 is defined by the first region 21, i.e., the parts 21 a and the parts 21b of the first region 21. Since the first region 21 continuously extends in the planar direction of the bulky sheet 10, the second regions 22 are each delineated by the first region 21 and therefore separated from each other.

In the bulky sheet 10 of the embodiment of Fig. 3, the area ratio of the first region 21 is higher than the total area ratio of the second regions 22. According to this embodiment, the bulky sheet 10 exhibits improved convenience or maneuverability when used as a cleaning sheet.

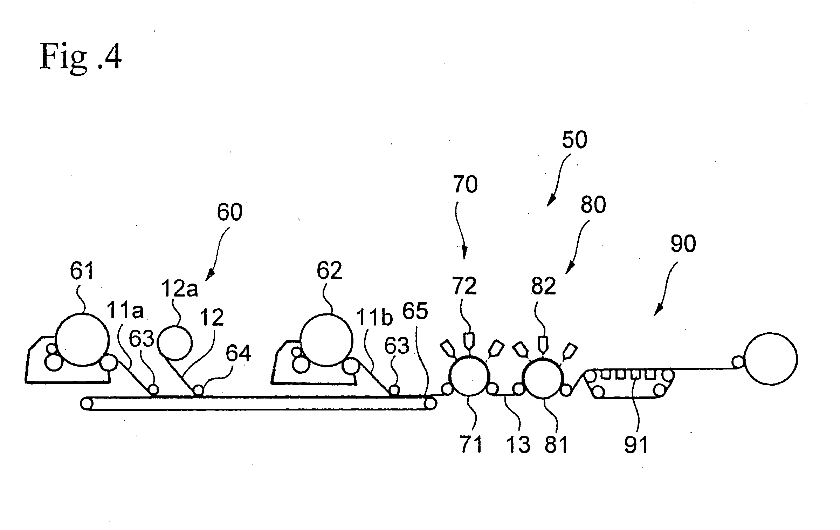

A preferred process of producing the bulky sheet 10 shown in Figs. 1 and 2 will then be described by way of Fig. 4. The process proceeds in the order of the step of superposing an upper fiber web 11a and a lower fiber web 11b on the respective sides of a net sheet 12, the step of entanglement, in which the fibers constituting the fiber webs 11a and 11b are hydro-entangled with each other to form a fiber aggregate and also with the net sheet 12, whereby the three members are united to make a laminate 13, and the step of patterning in which the laminate 13 is patterned in relief.

Apparatus 50 illustrated in Fig. 4 has a superposing part 60, an entangling part 70, a patterning part 80, and a dewatering part 90. The superposing part 60 has carding machines 61 and 62 for fabricating the fiber webs 11a and 11b, respectively, feed rolls 63 for feeding the fiber webs 11a and 11b, respectively, and a feed roll 64 for feeding the net sheet 12. The entangling part 70 has a drum 71 with a water-permeable peripheral surface and a first group of water jet nozzles 72 adapted to eject high pressure water jets against the peripheral surface of the drum 71. The patterning part 80 has a drum 81 with a water-permeable peripheral surface and a second group of water jet nozzles 82 adapted to eject high pressure water jets against the peripheral surface of the drum 81. The dewatering part 90 has a suction box 91.

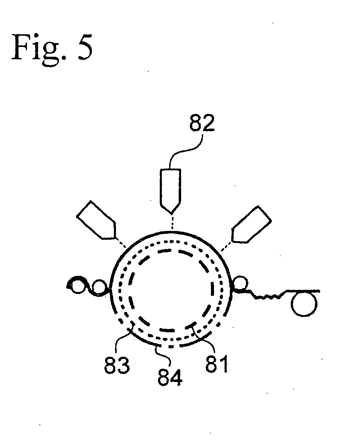

Fig. 5 illustrates the essential part of the patterning part 80. A first pattern template 83 having a number of projections and depressions is disposed along the peripheral surface of the drum 81, and a second pattern template 84 having a number of openings is disposed on the first pattern template 83 in parallel with the peripheral surface of the drum 81.

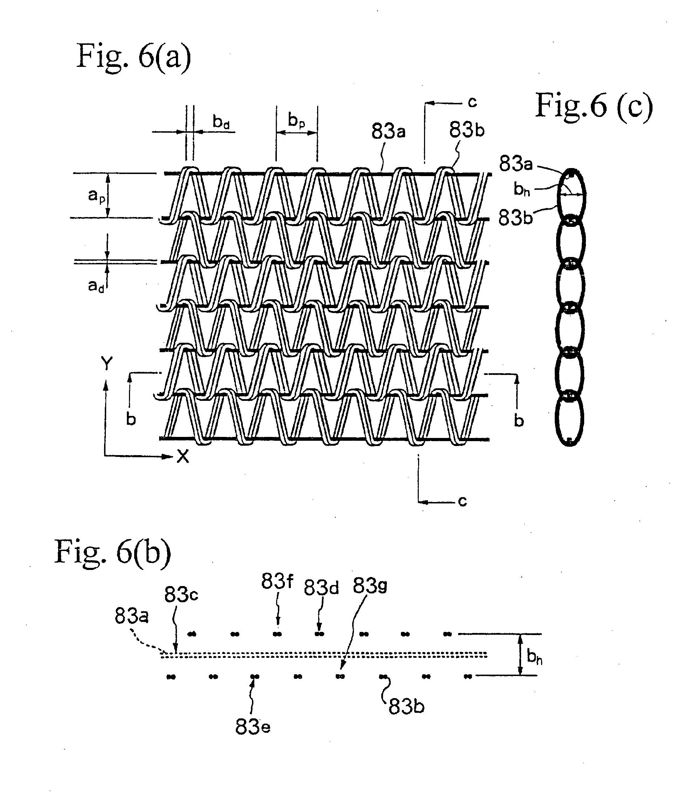

The first pattern template 83 of the patterning part 80 will be explained with reference to Figs. 6(a) through 6(c). Fig. 6(a) is a fragmentary plan view of the first pattern template 83; Fig. 6(b) is a cross-sectional view taken along line b-b in Fig. 6(a); and Fig. 6(c) is a cross-sectional view taken along line c-c in Fig. 6(a). The first pattern template 83 is composed of straight wires 83a and helical wires 84b. The straight wires 83a have a circular, an elliptic or a like cross-section and are arranged in parallel to each other at a regular interval. The straight wires 83a are preferably arranged on the same plane. Each helical wire 83b is helically wound around two adjacent straight wires 83a. Adjacent helical wires 83b have the same winding direction and the same winding pitch. The helical wire 83b shown in Fig. 6a is a unitary pair of subwires of the same circular cross-section arranged in a side-by-side configuration. The pair of subwires may be replaced with a single wire or a unitary set of three or more subwires. The helical wire 83b is wound in such a manner that the line connecting the centers of the two subwires is kept in parallel to the straight wires 83a at every position in the helical wire 83b. The subwires may have a circular or an elliptic section. Both the wires 83a and 83b are made of metal or a synthetic resin.

As illustrated in Fig. 6(c), the helical wire 83b, when seen in the helix axial direction, depicts an ellipse whose major axis is parallel with the plane on which the straight wires 83a are arrayed. The helical wire 83b may depict a circle or a triangle when seen in the helix axial direction.

As shown in Fig. 6(b), the helical wires 83b create a great number of peaks 83d and valleys 83e about a base plane (the plane 83c formed of the straight wires 83a). In short, the first pattern template 83 has a large number of projections and depressions. The term "projection" denotes the peak 83d and its vicinity, which are inclusively represented by symbol 83f, while the term "depression" means the portion in the middle of two adjacent peaks 83d which is represented by symbol 83g.

The center-to-center distance aₚ between adjacent straight wires 83a determines the length of the protrusions 31 of the bulky sheet 10. The winding pitch bp of the helical wire 83b governs the pitch of the protrusions 31 of the bulky sheet 10. The width b_{d} of the cross section of the helical wire 83b decides the width of the protrusions 31. The minor axis bₕ of the ellipse depicted by the helix of the helical wire 83b regulates the apparent thickness of the second regions 22 of the bulky sheet 10.

The width a_{d} of the straight wire 83a is preferably 0.5 to 5 mm, more preferably 1 to 3 mm. The pitch aₚ of the straight wires 83a is preferably 2 to 20 mm, more preferably 3 to 15 mm. The width b_{d} and the winding pitch bp of the helical wire 83b are preferably 0.5 to 10 mm, more preferably 1 to 6 mm, and 1 to 12 mm, more preferably 2 to 7 mm, respectively. The winding diameter bₙ (inner minor axis of the ellipse of the helical wire 83b) is preferably 3 to 18 mm, more preferably 5 to 15 mm. With the wires 83a and 83b satisfying these preferred conditions, the first pattern template 83 is capable of giving a relief pattern to the area of the laminate 13 corresponding to the second regions 22 to provide a bulky sheet 10. To create sufficient bulkiness and to increase energy efficiency in the relief patterning, it is preferred for the first pattern template 83 to have a certain thickness. A preferred thickness is 3 to 25 mm, more preferably 5 to 15 mm.

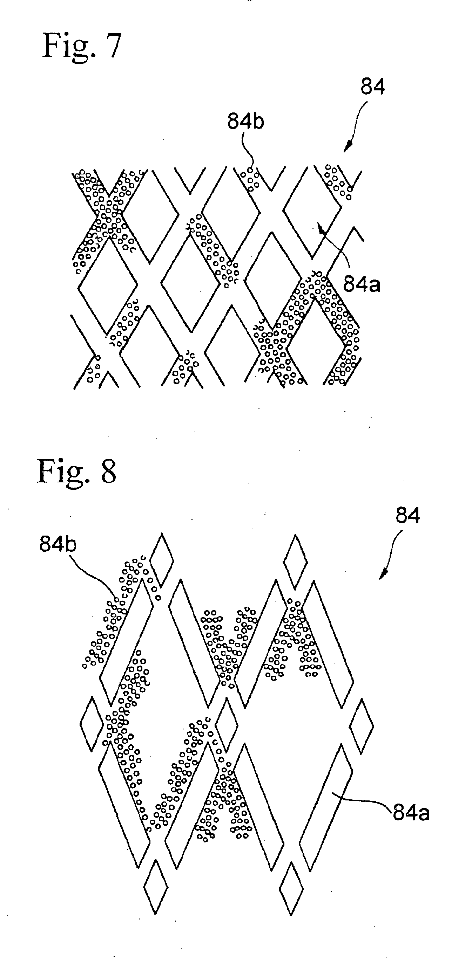

Fig. 7 illustrates the second pattern template 84 used in the patterning part 80. The second pattern template 84 is a rhombic lattice plate. Inside each rhombic lattice unit is a rhombic opening 84a. In other words, the second pattern template 84 is a plate having a number of rhombic openings 84a regularly arranged in a rhombic lattice pattern. The lattice bars of the second pattern template 84 have a large number of holes 84b bored regularly. The holes 84b are smaller than the openings 84a. The second pattern template 84 is made of metal such as stainless steel or a synthetic resin. Metal is preferred for durability. Fig. 8 illustrates a second pattern template 84 that is used to produce the bulky sheet 10 shown in Fig. 3.

In the superposing part 60 of the apparatus 50, the fiber webs 11a and 11 b are fed from the respective carding machines 61 and 62 by means of the respective feed rolls 63, while the net sheet 12 is unrolled from a net sheet roll 12a positioned between the carding machines 61 and 62 and fed by the feed roll 64. The fiber webs 11a and 11b are superposed on the respective sides of the net sheet 12 to form a stack of layers 65.

In the entanglement part 70, high pressure water jets are ejected from the first group of water jet nozzles 72 against the stack 65 wrapping around the permeable drum 71. Thus, the fibers of the fiber webs 11a and 11b in the stack 65 are entangled with each other to form a fiber aggregate, and at the same time, the fibers are entangled around the net sheet 12. A unitary laminate 13 is formed as a result. The laminate 13 is hydroentangled (spunlace) nonwoven fabric with the net sheet 12 inside. It is preferred for the fibers constituting the fiber aggregate in the laminate 13 to have a low degree of entanglement. The degree of entanglement of the fiber aggregate is preferably such that an entanglement coefficient is in the range of from 0.05 to 2 N·m/g, more preferably 0.2 to 1.2 N·m/g. In the subsequent patterning step in the patterning part 80, the laminate 13 with a so controlled degree of entanglement can be patterned in clear relief without making a hole to provide a bulky sheet, which, when used as a cleaning sheet, will successfully catch and hold fibrous dust and debris such as hair.

The coefficient of entanglement as referred to above, which is a measure representing the degree of fiber entanglement, is represented by the initial slope of the stress-strain curve measured in the direction perpendicular to the fiber orientation direction in the fiber aggregate. The smaller the coefficient, the weaker the entanglement. The "fiber orientation direction" is a direction in which the maximum load in a tensile test is the highest, the "stress" is the quotient of a tensile load divided by the width of a specimen clamped in a tensile tester and the basis weight of the fiber aggregate 11, and the "strain" means an amount of elongation.

While, in Fig. 4, the stack 65 is hydroentangled from only one side thereof, high pressure water jets may be applied from both sides of the stack 65.

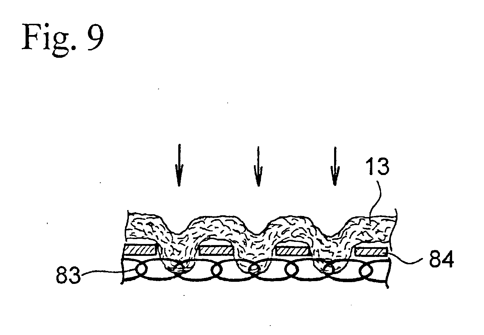

In patterning part 80, the laminate 13 is transferred to a relief patterning unit having the first pattern template 83 wrapped around the permeable drum 81 and the second pattern template 84 wrapped around the first pattern template 83. While the laminate 13 is moving with the relief patterning unit, high pressure water jets are spouted from the second group of water jet nozzles 82 against the laminate 13 to patternwise press the laminate 13 toward the patterning unit. The way the laminate 13 is patternwise pressed is illustrated in Fig. 9. The portions of the laminate 13 located directly on the first pattern template 83 through the openings 84a of the second pattern template 84 (see Fig. 7) are pressed against the first pattern template 83. As a result, the parts of the laminate 13 positioned on the depressions 83g of the first pattern template 83 (see Fig. 6b) are pressed down (toward the drum 81) and made to protrude, downward to the depressions 83g to form depressions 32 (see Figs. 1 and 2). On the other hand, the other parts of the laminate 13 that are positioned on the projections 83f of the first pattern template 83 (see Fig. 6b), not being allowed to protrude downward, become protrusions 31. There is thus formed the second regions 22 having the protrusions 31 and the depressions 32. Compared with before the application of water jets, the second regions 22 have a lower fiber density because of the fibers' downward protruding.

On being struck by water jets, the portion of the laminate 13 that is located on the second pattern template 84 is not allowed to protrude downward in the same way as the portions corresponding to the second regions 22 but allowed to protrude downward in the parts positioned on the holes 84b (see Fig. 7) of the second pattern template 84. There is thus formed the first region 21 having a great number of small protrusions 41. The fiber density of the laminate 13 in the portion corresponding to the first region 21 shows little change between before and after the application of water jets because the fibers' downward protruding is restricted.

A relief-patterned bulky sheet 10 is thus formed through the above-mentioned operations. The configuration of the protrusions 31 in the second regions 22 is decided by the configuration of the first pattern template 83 and the entangling energy applied to the fiber aggregate by the high-pressure water jets in the entangling part 70 and the patterning part 80. The entangling energy is controlled by such conditions as the shape of the water jet nozzles, the alignment of the nozzles (the pitch, the number of rows and the number of nozzles), the water pressure, the line speed, and so forth.

The resulting bulky sheet 10 is dewatered by suction in the suction box 91, dried, and wound into a roll or cut into lengths. The fiber aggregate 11 in the second regions 22 of the bulky sheet 10 preferably has substantially an equal entanglement coefficient to the fiber aggregate before the relief patterning (the laminate 13), i.e., an entanglement coefficient in the range of from 0.05 to 2 N·m/g, more preferably 0.2 to 1.2 N·m/g.

According to the process of the present invention, a bulky sheet having a relief pattern in a desired configuration can easily be obtained by the selection of the first and second pattern templates to be combined.

The bulky sheet according to the present invention is conveniently used as a wet or a dry cleaning sheet and a sanitary article such as a mask or gauze. In wet cleaning sheet applications, the bulky sheet is impregnated with an aqueous detergent.

An aqueous detergent having a viscosity of 20 to 30000 mPa·s at 25°C is preferably used in wet cleaning sheet applications to offer the following advantages: (1) The detergent is prevented from being released excessively from the beginning of a cleaning operation. The release of the detergent is kept constant from the very beginning to the end of a cleaning operation. (2) The cleaning sheet has longer-lasting cleaning performance enough to clean a wider area. (3) The sheet has reduced frictional resistance in wiping a surface to be cleaned even in the beginning of a cleaning operation because of the slow release of the detergent. (4) Because of the slow release of the detergent, the fibers on the cleaning sheet surface have a high degree of freedom even in the beginning of a cleaning operation and are therefore capable of trapping and holding hair or fluffy dust. Where the viscosity of an aqueous detergent is lower than 20 mPa·s, it tends to be difficult to control the amount of the detergent released in the beginning of a cleaning operation. An aqueous detergent having a viscosity exceeding 30000 mPa·s tends to be difficult to infiltrate into the sheet. Taking these tendencies into consideration, the viscosity of the aqueous detergent is more preferably 100 to 1000 mPa·s, even more preferably 300 to 800 mPa·s. The viscosity is measured with a Brookfield viscometer. The rotor and the number of revolutions are selected as appropriate to the viscosity of the aqueous detergent.

It is desirable for the aqueous detergent to contain substantially no water-insoluble solid particles. Water-insoluble solid particles, if present in the impregnating aqueous detergent, remain on the surface wiped with the wet cleaning sheet and may need another wipe. Existence of preferably up to about 0.1 % by weight of solid particles as impurities is acceptable, nevertheless.

The aqueous detergent preferably contains a surface active agent, an alkali agent, a thickener, and a water-soluble solvent in water (medium). All the components of the aqueous detergent are preferably substantially water-soluble. The residual nonvolatile content of the aqueous detergent is preferably 10% by weight or less, more preferably 5% by weight or less, even more preferably 1% by weight or less, to give a better finish after cleaning.

Examples of the surface active agent used in the aqueous detergent include anionic, nonionic, cationic, and amphoteric ones. From the standpoint of detergency and finish, suited are nonionic surface active agents, such as polyoxyalkylene (number of moles of alkylene oxide: 1 to 20) C8-C22 alkyl (straight-chain or branched) ethers, C8-C22 alkyl (straight-chain or branched) glycosides (average degree of sugar condensation: 1 to 5), sorbitan C8-C22 fatty acid (straight-chain or branched) esters, and C6-C22 alkyl (straight-chain or branched) glycerol ethers; and amphoteric ones, such as alkylcarboxybetaines, alkylsulfobetaines, alkylhydroxysulfobetaines, alkylamidocarboxybetaines, alkylamidosulfobetaines, and alkylamidohydroxysulfobetaines, each having 8 to 24 carbon atoms in the alkyl moiety thereof. From the viewpoint of detergency and finish, a preferred content of the surface active agent in the aqueous detergent is 0.01% to 1.0% by weight, more preferably 0.05% to 0.5% by weight.

Examples of the alkali agent include hydroxides, e.g., sodium hydroxide, carbonates, e.g., sodium carbonate, alkaline sulfates, e.g., sodium hydrogensulfate, phosphates, e.g., sodium primary phosphate, organic alkali metal salts, e.g., sodium acetate and sodium succinate, ammonia, alkanolamines, e.g., mono-, di- or triethanolamine, β-aminoalkanols, e.g., 2-amino-2-methyl-1-propanol, and morpholine. Alkanolamines, e.g., mono-, di- or triethanolamine, β-aminoalkanols, e.g., 2-amino-2-methyl-1-propanol, and morpholine are preferred in view of the feel and pH buffering action. A suitable content of the alkali agent in the aqueous detergent is 0.01% to 1% by weight, preferably 0.05% to 0.5% by weight, from the standpoint of detergency and feel.

Examples of the thickener include water-soluble polymers such as natural polysaccharides, semisynthetic polymers such as cellulosic polymers and starch derivatives, synthetic polymers such as vinyl polymers and polyethylene oxide, and clay minerals. A polyacrylic acid thickener or an acrylic acid-alkyl methacrylate copolymer thickener, which are less sticky and less slimy, or a mixture thereof is particularly preferred. These acrylic acid-based thickeners preferably develop viscosity in their sodium salt form. The thickener is preferably used in an amount of 0.01 % to 2% by weight, more preferably 0.02% to 1% by weight, in view of the finish of cleaning.

The water-soluble solvent used in the aqueous detergent is suitably one or more selected from monohydric alcohols, polyhydric alcohols, and derivatives thereof. Those having a vapor pressure of 267 Pa (2 mmHg) or higher are particularly preferred in view of finish. For example, ethanol, isopropyl alcohol, propanol, ethylene glycol monomethyl ether, and propylene glycol monomethyl ether are preferred. A suitable water-soluble solvent content in the aqueous detergent is 1% to 50% by weight, preferably 1% to 20% by weight, from the viewpoint of smell and low skin irritation.

The aqueous detergent can contain an antimicrobial agent in addition to the above-described components thereby to endow the detergent with an antimicrobial effect in addition to the cleaning effect. Useful antimicrobial agents include hydrogen peroxide, hypochlorous acid, sodium hypochlorite, quaternary ammonium salts, sodium benzoate, sodium p-hydroxybenzoate, and natural antimicrobials. Quaternary ammonium salts and polylysine (natural antimicrobial agent), etc. are particularly preferred in view of their compounding stability and antimicrobial activity. A suitable content of the antimicrobial agent in the aqueous detergent is 0.005% to 2% by weight, particularly 0.01% to 1% by weight, taking into consideration the balance between the antimicrobial effect and low skin irritation.

The aqueous detergent can further contain perfumes, antifungals, colorants (dyes and pigments), chelating agents, waxes, and so forth according to necessity.

The proportion of water, a medium of the aqueous detergent, is preferably 50% to 99.9% by weight, more preferably 80% to 99% by weight, in view of the finish of the cleaned surface.

The aqueous detergent is infiltrated into the bulky sheet in an amount of 150% to 500% by weight based on the dry weight of the sheet. With an impregnation percentage less than 150%, the wet cleaning sheet can fail to exhibit sufficient cleaning performance to wipe off stains or dust. With an impregnation percentage more than 500%, too much detergent may be released to a floor surface. It can follow that dust and debris remains on the floor. Too much detergent can adversely affect some kinds of wooden flooring. To ensure cleaning performance, a more preferred impregnation percentage is 200% to 400% by weight. The impregnation percentage of an aqueous detergent can be calculated from the weights of an unimpregnated bulky sheet and an aqueous detergent-impregnated bulky sheet either as such or after padded through a mangle to remove excess aqueous detergent, measured with no load applied.

The present invention will now be illustrated in greater detail with reference to Examples, but it should be understood that the invention is not construed as being limited thereto. Unless otherwise noted, all the percents are by weight.

### Example 1

A bulky sheet illustrated in Fig. 1 was fabricated from the materials shown in Table 1 below using the apparatus of Fig. 4. The bulky sheet was impregnated with 350% of an aqueous detergent consisting of water/ethanol/2-amino-2-methyl-1-propanol/dodecyl glucoside (average degree of condensation: 1.4)/thickener (Carbopol ETD2020, an acrylic acid-C₁₀₋₃₀ alkyl methacrylate copolymer available from Nikko Chemical Co., Ltd.) in a weight ratio of 93.73/6/0.1/0.1/0.07. The aqueous detergent had a viscosity of 500 mPa·s at 25°C. The nonvolatile content of the aqueous detergent was 0.17%.

The resulting wet sheet was evaluated for hair trapping capabilities, maneuverability (of a sweeper having the sheet attached thereto), dust trapping capabilities, resistance to fiber fuzzing and shedding, and slow detergent releasability in accordance with the following methods. The results obtained are shown in Table 2.

### (1) Hair trapping capabilities

The sheet was attached to a sweeper Quickle Wiper (available from Kao Corp.) with the relief patterned side out. Five human hairs of about 10 cm in length were scattered over a 30 cm by 60 cm area of a wooden floor (Woodyile MT613T, from Matsushita Electric Works, Ltd.). The area was cleaned by giving two forward and backward sweeps over a given length (60 cm), and the number of hairs caught on the sheet was counted. The same operation was carried out six times in total to count how many hairs out of 30 were caught up by the sheet. The total number of hairs caught up was divided by 30, and the quotient was multiplied by 100 to give a hair trapping ratio (%).

### (2) Dust trapping capabilities

The wet sheet was attached to a sweeper Quickle Wiper (from Kao Corp.). As model dust, JIS test powder class 7 (fine particles of the Kanto loam beds) weighing 0.1 g was evenly spread on a 100 cm x 100 cm area of a wooden floor (Woodytile MT613T, from Matsushita Electric Works, Ltd.) with a brush. The dusted area of the floor was cleaned by giving four side-by-side forward and backward sweeps of Quickle Wiper. The same operation was conducted six times in total using the same wet sheet. The soiled sheet was dried and weighed to obtain the total weight of the sheet, the nonvolatile content of the detergent, and the dust trapped by the sheet. The dry weight of the sheet measured before impregnation and the theoretical weight of the nonvolatile content of the detergent were subtracted from the total weight to give the weight of the trapped dust. The weight of the trapped dust was divided by the total weight of the dust spread (0.6 g = 6 x 0.1 g), and the quotient was multiplied by 100 to give a dust trapping ratio (%).

### (3) Maneuverability of sweeper

The wet sheet was attached to the swivel head of a sweeper Quickle Wiper (from Kao Corp.) with the relief patterned side out. A wooden floor (Woodytile type E KER501, from Matsushita Electric Works, Ltd.) was wiped with the sweeper having the wet sheet attached thereto. The sweeper was moved forward and backward with one hand. The maneuverability of the sweeper at the beginning of cleaning was rated as follows.
A: The sweeper is smoothly maneuvered with one hand without causing the swivel head edge of the sweeper to lift on changing the sweeping direction from forward to backward.
B: The sweeper is smoothly maneuvered with one hand, but the swivel head edge of the sweeper sometimes lifts slightly on changing the sweeping direction from forward to backward.
C: The sweeper is smoothly maneuvered with one hand, but the head edge of the sweeper lifts on changing the sweeping direction from forward to backward.
D: Force is required to start sliding the sweeper forward. The swivel head of the sweeper sometimes turns upside down on changing the sweeping direction from forward to backward.

### (4) Resistance to fiber fuzzing and shedding

The wet sheet was mechanically abraded on its relief patterned side and rated for the resistance to fiber shedding based on the amount of shed fibers.
- A:: There is very little fiber shedding and no problem.
- B:: Fibers shed slightly.
- C:: Fibers shed considerably.

### (5) Slow detergent releasability

The wet sheet was attached to a sweeper Quickle Wiper (from Kao Corp.) with its relief patterned side out. A 10-tatami size (one tatami size corresponds to an area of 90 cm by 180 cm) wooden floor was swept with the sweeper in the way described below, and the amount of the aqueous detergent released for every tatami size was measured. The sheet was removed from the sweeper every time one tatami was wiped, and the wet sheet thus removed was weighed to measure the amount of the aqueous detergent released. One tatami area was divided into two in the longitudinal direction and four in the width direction to make 8 sections in total. A forward and backward stroke was given per section. Eight strokes completed cleaning one tatami area.

### Example 2

A wet bulky sheet was obtained in the same manner as in Example 1, except for changing the impregnation percentage to 250%. The resulting sheet was tested in the same manner as in Example 1. The results obtained are shown in Table 2.

### Example 3

A wet bulky sheet illustrated in Fig 3 was obtained in the same manner as in Example 1, except for changing the impregnation percentage to 250% and using the second pattern template illustrated in Fig. 8. The resulting sheet was tested in the same manner as in Example 1. The results obtained are shown in Table 2.

### Comparative Example 1

A wet bulky sheet was obtained in the same manner as in Example 1, except for changing the impregnation percentage to 250% and using no second pattern template. The resulting sheet did not have the first region 21. The sheet was tested in the same manner as in Example 1. The results obtained are shown in Table 2.

**TABLE 1**

| | | Example 1 | | Example 2 | | Example 3 | | Comp. Example 1 | |
|---|---|---|---|---|---|---|---|---|---|
| | | Fiber Length (mm) | Amount (wt%) | Fiber Length (mm) | Amount (wt%) | Fiber Length (mm) | Amount (wt%) | Fiber Length (mm) | Amount (wt%) |
| Upper and Lower Fiber Webs | PET Fiber | 44 | 50 | 44 | 50 | 38 | 30 | 38 | 50 |
| | Acrylic Fiber | 51 | 25 | 51 | 25 | 51 | 35 | 51 | 25 |
| | Rayon Fiber Rayon Fiber | 40 | 25 | 40 | 25 | 40 | 35 | 40 | 25 |
| | Average Fiber Length (mm) | 45 | | 45 | | 43 | | 42 | |
| | Basis Weight (g/m²) | 30 | | 30 | | 30 | | 30 | |
| Net Sheet | Material/Basis Weight (g/m²) | PP**/5 | | PP/5 | | PP/5 | | PP/5 | |
| | Aperture/Filament Diameter | 8 mm/130 µm | | 8 mm/130 µm | | 8 mm/130 µm | | 8 mm/130 µm | |
| First Region | Fiber Density (g/cm³) | 0.059 | | 0.059 | | 0.042 | | - | |
| | Thickness (mm) | 1.10 | | 1.10 | | 1.56 | | - | |
| | Area Ratio (%) | | | 44 | | 76 | | 0 | |
| Second Region | Fiber Density (g/cm³) | 0.030 | | 0.030 | | 0.030 | | 0.033 | |
| | Thickness (mm) | 2.20 | | 2.20 | | 2.20 | | 2.00 | |
| | Area Ratio (%) | 56 | | 56 | | 24 | | 100 | |
| | Configuration | Fig. 1 | | Fig. 1 | | Fig. 3 | | - | |

| | | | | | | | | | |
|---|---|---|---|---|---|---|---|---|---|
| PET: Polyethylene terephthalate PP: Polypropylene | | | | | | | | | |

**TABLE 2**

| | | Example 1 | Example 2 | Example 3 | Comparative Example 1 |
|---|---|---|---|---|---|
| Detergent Impregnation Percentage (%) | | 350 | 250 | 250 | 250 |
| Basis Weight (g/m²) | | 65 | 65 | 65 | 65 |
| Hair Trapping Ratio (%) | | 86 | 97 | 87 | 80 |
| Dust Trapping Ratio (%) | | 90 | 86 | 84 | 86 |
| Sweeper Maneuverability | | A | A | A | B |
| Resistance to Fiber Shedding | | A | A | A | B |
| Amount of Detergent Released (g/1.62 m²) | 1st section | 0.99 | 0.50 | 0.55 | 0.74 |
| | 2nd section | 0.45 | 0.31 | 0.26 | 0.32 |
| | 3rd section | 0.27 | 0.22 | 0.25 | 0.19 |
| | 4th section | 0.29 | 0.20 | 0.19 | 0.15 |
| | 5th section | 0.23 | 0.18 | 0.17 | 0.17 |
| | 6th section | 0.20 | 0.16 | 0.15 | 0.14 |
| | 7th section | 0.23 | 0.17 | 0.13 | 0.15 |
| | 8th section | 0.22 | 0.18 | 0.12 | 0.14 |
| | 9th section | 0.17 | 0.16 | 0.11 | 0.13 |
| | 10th section | 0.18 | 0.18 | 0.13 | 0.12 |
| | total | 3.23 | 2.26 | 2.06 | 2.25 |

As is apparent from the results in Table 2, the sheets of Examples prove superior to the comparative sheet in terms of hair trapping capabilities, maneuverability in working with a sweeper, resistance to fiber fuzzing and shedding, and equalized release of the detergent.

As fully described, having a denser and thinner first region and less dense and thicker second regions, the bulky sheet of the present invention hardly undergoes fuzzing and shedding. In applications as a cleaning sheet, the bulky sheet of the invention exhibits improved cleaning performance including dust trapping capabilities. When, in particular, impregnated with a cleaning liquid to provide a wet cleaning sheet, the bulky sheet of the invention provides a user with an ease of wiping operation and releases the cleaning liquid slowly.

## Claims

1. A bulky sheet comprising a fiber aggregate formed by hydroentanglement of a fiber web,
the fiber aggregate comprising a first region (21) having a high fiber density and a small thickness and a second region (22) having a lower fiber density and a larger thickness than the first region,
the second region (22) being defined by a closed figure defined by the first region (21), the first region having protrusions (41), and
the second region (22) having protrusions (31) and depressions (32), wherein
the protrusions (41) in the first region (21) are dome-shaped, and
the protrusions (31) in the second region (22) are substantially equal in size and provided in a regular pattern, each having the shape of a mountain which is long and narrow in its plan view.

2. The bulky sheet according to claim 1, further comprising a net sheet located in the fiber aggregate, the fibers of the fiber aggregate being entangled around the net sheet.

3. The bulky sheet according to claim 1 or 2, wherein the first region has a fiber density of 0.020 to 0.65 g/cm³ and a thickness of 0.1 to 1.5 mm, and the second region has a fiber density of 0.005 to 0.65 g/cm³ and a thickness of 1.0 to 5.0 mm.

4. The bulky sheet according to any one of claims 1 to 3, having a basis weight of 40 to 200 g/m², the fibers of the fiber aggregate having a length of 20 to 100 mm.

5. The bulky sheet according to any one of claims 1 to 4, wherein the first region has an area ratio of 20% to 90%, and the second region has an area ratio of 10% to 80%.

6. The bulky sheet according to any one of claims 1 to 5, wherein the first region has a large number of small protrusions.

## Patentansprüche

1. Ein bauschiges Blatt, umfassend ein durch Wasserstrahlverfestigen eines Fasernetzes gebildetes Faseraggregat,
wobei das Faseraggregat einen ersten Bereich (21) mit einer hohen Faserdichte und einer geringen Dicke und einen zweiten Bereich (22) mit einer geringeren Faserdichte und einer größeren Dicke als der erste Bereich umfasst,
wobei der zweite Bereich (22) durch ein geschlossenes Muster definiert ist, das durch den ersten Bereich (21) definiert ist,
wobei der erste Bereich Erhebungen (41) aufweist, und
der zweite Bereich (22) Erhebungen (31) und Vertiefungen (32) aufweist, wobei die Erhebungen (41) in dem ersten Bereich (21) kuppelförmig sind und
die Erhebungen (31) in dem zweiten Bereich (22) im Wesentlichen die gleiche Größe haben und in einem regelmäßigen Muster bereitgestellt sind, wobei jede die Form eines Berges hat, der in seiner Draufsicht langgestreckt und schmal ist.

2. Das bauschige Blatt gemäß Anspruch 1, weiter umfassend ein im Faseraggregat befindliches Netzblatt, wobei die Fasern des Faseraggregats um das Netzblatt herum verwirbelt sind.

3. Das bauschige Blatt gemäß Anspruch 1 oder 2, wobei der erste Bereich eine Faserdichte von 0,020 bis 0,65 g/cm³ und eine Dicke von 0,1 bis 1,5 mm und der zweite Bereich eine Faserdichte von 0,005 bis 0,65 g/cm³ und eine Dicke von 1,0 bis 5,0 mm aufweist.

4. Das bauschige Blatt gemäß einem der Ansprüche 1 bis 3, welches ein Grundgewicht von 40 bis 200 g/m² aufweist, wobei die Fasern des Faseraggregats eine Länge von 20 bis 100 mm aufweisen.

5. Das bauschige Blatt gemäß einem der Ansprüche 1 bis 4, wobei der erste Bereich ein Flächenverhältnis von 20% bis 90% und der zweite Bereich ein Flächenverhältnis von 10% bis 80% aufweist.

6. Das bauschige Blatt gemäß einem der Ansprüche 1 bis 5, wobei der erste Bereich eine große Anzahl kleiner Erhebungen aufweist.

## Revendications

1. Feuille volumineuse comprenant un agrégat de fibres fait d'un hydroenchevêtrement d'une nappe de fibres,
l'agrégat de fibres comprenant une première région (21) présentant une densité de fibres élevée et une petite épaisseur et une seconde région (22) présentant une densité de fibres plus faible et une épaisseur plus importante que la première région,
la seconde région (22) étant définie par une figure fermée définie par la première région (21),
la première région présentant des protubérances (41), et
la seconde région (22) présentant des protubérances (31) et des creux (32), dans laquelle
les protubérances (41) dans la première région (21) sont en forme de dôme, et
les protubérances (31) dans la seconde région (22) ont une taille sensiblement égale et sont agencées selon un motif régulier, chacune ayant une forme de montagne longue et étroite dans sa vue en plan.

2. Feuille volumineuse selon la revendication 1, comprenant en outre un filet situé dans l'agrégat de fibres, les fibres de l'agrégat de fibres étant enchevêtrées autour du filet.

3. Feuille volumineuse selon la revendication 1 ou 2, dans laquelle la première région présente une densité de fibres de 0,020 à 0,65 g/cm³ et une épaisseur de 0,1 à 1,5 mm, et la seconde région présente une densité de fibres de 0,005 à 0,65 g/cm³ et une épaisseur de 1,0 à 5,0 mm.

4. Feuille volumineuse selon l'une quelconque des revendications 1 à 3, présentant une masse surfacique de 40 à 200 g/m², les fibres de l'agrégat de fibres ayant une longueur de 20 à 100 mm.

5. Feuille volumineuse selon l'une quelconque des revendications 1 à 4, dans laquelle la première région présente un rapport de surface de 20 % à 90 %, et la seconde région présente un rapport de surface de 10 % à 80 %.

6. Feuille volumineuse selon l'une quelconque des revendications 1 à 5, dans laquelle la première région présente un grand nombre de petites protubérances.
